(19) Europäisches Patentamt
European Patent Office
Office européen des brevets

(11) **EP 4 761 170 A1**

(12) **EUROPEAN PATENT APPLICATION**

(43) Date of publication:
**17.06.2026 Bulletin 2026/25**

(21) Application number: **25220636.2**

(22) Date of filing: **04.12.2025**

(51) International Patent Classification (IPC):
**H04L 9/00** (2022.01)

(52) Cooperative Patent Classification (CPC):
**H04L 9/008; H03G 7/001;** H04R 3/00; H04R 27/00;
H04R 2227/003; H04R 2420/07

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.12.2024 FI 20246451**

(71) Applicant: **Nokia Technologies Oy
02610 Espoo (FI)**

(72) Inventors:
• **HEYMAN, Geert
Kalmthout (BE)**
• **HOSTE, Lode
Hove (BE)**
• **HEYDARI BENI, Emad
c/o Nokia Bell NV, Antwerp (BE)**
• **TSIAFLAKIS, Paschalis
Heist-op-den-Berg (BE)**

(74) Representative: **Nokia EPO representatives
Nokia Technologies Oy
Karakaari 7
02610 Espoo (FI)**

(54) **METHOD, APPARATUS AND COMPUTER PROGRAM**

(57) There is provided a method, apparatus and computer program for causing an apparatus to perform: obtaining at least one audio signal; compressing the at least one audio signal using at least one first algorithm to output at least one compressed audio signal, wherein a summation of two or more compressed audio signals is largely homomorphic to a summation of two or more audio signals; and encrypting the at least one compressed audio signal using a homomorphic encryption algorithm to form at least one encrypted audio signal.

Fig. 4

**Description**

FIELD

The present application relates methods, apparatus, and computer programs associated with homomorphic compression audio signal(s).

BACKGROUND

In digital communication systems, digital encryption is used over the wireless or wireline communication link to make it less likely that an interceptor of transmitted encrypted data can read the intercepted data.

For many encryption methods in digital mobile communication systems, a user-specific encryption key is established for each call at a user equipment (UE) and at an access network node (e.g., a gNB) serving the UE. After encoding a digitized speech unit to compress the speech information, channel encoding is performed for the speech data. The output of the channel encoder is encrypted. The encrypted data transmitted from the UE is then deciphered at the network access node and/or at a server accessible via the network access node. After deciphering, the network access node may pass the deciphered speech data to further transmission, for instance towards a Public Switched Telephone Network (PSTN) so that the intended recipient may receive the call.

Such methods are not considered private as there is an intermediate entity between the transmitter (e.g., a UE) and the intended recipient (e.g., another UE). To address this, end-to-end encryption (E2EE) methods have been developed. E2EE is a security method that keeps messages private between two communicating users, preventing anyone else from accessing the data. This includes the communication system provider, internet service provider, or malicious actors.

SUMMARY

According to a first aspect, there is provided an apparatus comprising means for performing: obtaining at least one audio signal; compressing the at least one audio signal using at least one first algorithm to output at least one compressed audio signal, wherein a summation of two or more compressed audio signals is largely homomorphic to a summation of two or more audio signals; and encrypting the at least one compressed audio signal using a homomorphic encryption algorithm to form at least one encrypted audio signal.

According to a second aspect, there is provided a method for causing an apparatus to perform: obtaining at least one audio signal; compressing the at least one audio signal using at least one first algorithm to output at least one compressed audio signal, wherein a summation of two or more compressed audio signals is largely homomorphic to a summation of two or more audio signals; and encrypting the at least one compressed audio signal using a homomorphic encryption algorithm to form at least one encrypted audio signal.

According to a third aspect, there is provided an apparatus comprising: at least one processor; and at least one memory comprising code that, when executed by the at least one processor, causes the apparatus to perform: obtaining at least one audio signal; compressing the at least one audio signal using at least one first algorithm to output at least one compressed audio signal, wherein a summation of two or more compressed audio signals is largely homomorphic to a summation of two or more audio signals; and encrypting the at least one compressed audio signal using a homomorphic encryption algorithm to form at least one encrypted audio signal.

According to a fourth aspect, there is provided an apparatus comprising: obtaining circuitry for obtaining at least one audio signal; compressing circuitry for compressing the at least one audio signal using at least one first algorithm to output at least one compressed audio signal, wherein a summation of two or more compressed audio signals is largely homomorphic to a summation of two or more audio signals; and encrypting circuitry for encrypting the at least one compressed audio signal using a homomorphic encryption algorithm to form at least one encrypted audio signal.

The following may apply in respect of any (e.g., one or more including all) of the above first to fourth aspects.

The apparatus may be caused to perform transmitting the at least one encrypted audio signal to a server.

The apparatus may be caused to perform: identifying one or more characteristics and/or requirements of a service corresponding to the at least one audio signal; and selecting first respective value(s) for one or more parameters of the at least one first algorithm based on the identifying.

The one or more characteristics and/or requirements may comprise one or more of: a bandwidth available for transmission of the at least one encrypted audio signal; a bandwidth available for receiving at least one other encrypted audio signal; a quality of service associated with said service; a quality of experience associated with said service; a channel quality available for uplink transmission; or a channel quality available for downlink transmission.

The apparatus may be caused to perform: identifying the homomorphic encryption algorithm and/or one or more parameters of the homomorphic encryption algorithm; and selecting second respective value(s) for one or more parameters of the at least one first algorithm based on the identifying.

The apparatus may be caused to perform sending said first and/or second respective value(s) to a server.

The first algorithm may comprise a neural audio compression algorithm that is configured to output compressed audio signals that are compliant with the homomorphic property of claim 1.

Vector quantisation may not be performed by the apparatus on said at least one audio signal during said compressing.

The apparatus may be caused to perform normalising the at least one compressed audio signal or the at least one audio signal using a scaling factor; and providing the scaling factor and the at least one encrypted signal to a server.

According to a fifth aspect, there is provided an apparatus comprising means for performing: obtaining at least one encrypted audio signal; decrypting the at least one compressed audio signal using a homomorphic encryption algorithm to form at least one decrypted audio signal; and decompressing the at least one decrypted audio signal using at least one first algorithm to output at least one decompressed audio signal, wherein a summation of two or more decrypted audio signals is largely homomorphic to a summation of two or more decompressed audio signals.

According to a sixth aspect, there is provided a method for causing an apparatus to perform: obtaining at least one encrypted audio signal; decrypting the at least one compressed audio signal using a homomorphic encryption algorithm to form at least one decrypted audio signal; and decompressing the at least one decrypted audio signal using at least one first algorithm to output at least one decompressed audio signal, wherein a summation of two or more decrypted audio signals is largely homomorphic to a summation of two or more decompressed audio signals.

According to a seventh aspect, there is provided an apparatus comprising: at least one processor; and at least one memory comprising code that, when executed by the at least one processor, causes the apparatus to perform: obtaining at least one encrypted audio signal; decrypting the at least one compressed audio signal using a homomorphic encryption algorithm to form at least one decrypted audio signal; and decompressing the at least one decrypted audio signal using at least one first algorithm to output at least one decompressed audio signal, wherein a summation of two or more decrypted audio signals is largely homomorphic to a summation of two or more decompressed audio signals.

According to an eighth aspect, there is provided an apparatus comprising: obtaining circuitry for obtaining at least one encrypted audio signal; decrypting circuitry for decrypting the at least one compressed audio signal using a homomorphic encryption algorithm to form at least one decrypted audio signal; and decompressing circuitry for decompressing the at least one decrypted audio signal using at least one first algorithm to output at least one decompressed audio signal, wherein a summation of two or more decrypted audio signals is largely homomorphic to a summation of two or more decompressed audio signals.

The following may apply in respect of any (e.g., one or more including all) of the above fifth to eighth aspects.

The apparatus may be caused to perform: identifying one or more characteristics and/or requirements of a service corresponding to the at least one encrypted audio signal; and selecting first respective value(s) for one or more parameters of the at least one first algorithm based on the identifying.

The one or more characteristics and/or requirements may comprise one or more of: a bandwidth available for transmission of the at least one encrypted audio signal; a bandwidth available for receiving at least one other encrypted audio signal; a quality of service associated with said service; a quality of experience associated with said service; a channel quality available for uplink transmission; or a channel quality available for downlink transmission.

The apparatus may be caused to perform: identifying the homomorphic encryption algorithm and/or one or more parameters of the homomorphic encryption algorithm; and selecting second respective value(s) for one or more parameters of the at least one first algorithm based on the identifying.

The apparatus may be caused to perform: receiving, from a server, third respective value(s) for one or more parameters of the at least one first algorithm.

The first algorithm may comprise a neural audio decompression algorithm that is configured to output decompressed audio signals based on input decrypted audio signals, wherein the decrypted audio signals are compliant with the homomorphic property of claim 10.

Vector dequantisation may not be performed by the apparatus on said at least one decrypted audio signal during said decompressing.

The apparatus may be caused to perform: receiving at least one scaling factor; and scaling the at least one decompressed audio signal and/or the least one decrypted audio signal using the at least one scaling factor.

According to a ninth aspect, there is provided an apparatus comprising means for performing: receiving an encrypted audio signal that was encrypted using a homomorphic encryption algorithm; without decompressing the encrypted audio signal, performing one or more computations on the encrypted audio signal using a second algorithm to form a computed encrypted audio signal that combines the encrypted audio signal with another audio signal; and providing the computed encrypted audio signal to one or more user equipment.

According to a tenth aspect, there is provided a method for causing an apparatus to perform: receiving an encrypted audio signal that was encrypted using a homomorphic encryption algorithm; without decompressing the encrypted audio signal, performing one or more computations on the encrypted audio signal using a second algorithm to form a computed encrypted audio signal that combines the encrypted audio signal with another audio signal; and providing the computed encrypted audio signal to one or more user equipment.

According to an eleventh aspect, there is provided an apparatus comprising: at least one processor; and at least one memory comprising code that, when executed by the at least one processor, causes the apparatus to perform: receiving an encrypted audio signal that was encrypted using a homomorphic encryption algorithm; without decompressing the encrypted audio signal, performing one or more computations on the encrypted audio signal using a second algorithm to form a computed encrypted audio signal that combines the encrypted audio signal with another audio signal; and providing the computed encrypted audio signal to one or more user equipment.

According to a twelfth aspect, there is provided an apparatus comprising: receiving circuitry for receiving an encrypted audio signal that was encrypted using a homomorphic encryption algorithm; performing circuitry for, without decompressing the encrypted audio signal, performing one or more computations on the encrypted audio signal using a second algorithm to form a computed encrypted audio signal that combines the encrypted audio signal with another audio signal; and providing circuitry for providing the computed encrypted audio signal to one or more user equipment.

The following may apply in respect of any (e.g., one or more including all) of the above ninth to twelfth aspects.

The another audio signal may comprise a signal that corresponds to an audio filter.

The apparatus may be caused to perform: identifying the homomorphic encryption algorithm and/or one or more parameters of the homomorphic encryption algorithm; and selecting the second algorithm based on the identifying.

The apparatus may be caused to perform: receiving another encrypted audio signal that was encrypted using a homomorphic encryption algorithm, wherein the another audio signal comprises the received another encrypted audio signal.

The performing one or more computations may comprise performing at least one of: addition of the two or more encrypted audio signals; addition and normalisation of the two or more encrypted audio signals; addition with dynamic range compression of the two or more encrypted audio signals; or addition with multiplication of the two or more encrypted audio signals to provide context-based weighting.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

DESCRIPTION OF FIGURES

Embodiments will now be described, by way of example only, with reference to the accompanying Figures in which:

Figure 1 shows a representation of an encoder-decoder architecture;
Figures 2A to 2C illustrate example network architecture for conference calls;
Figure 3 shows a representation of an encoder-decoder architecture;
Figure 4 shows a representation of an example encoder-decoder architecture;
Figure 5 shows a representation of an encoder-decoder architecture;
Figures 6A to 7 illustrate example methods that may be performed by apparatus described herein;
Figure 8 shows a representation of a control apparatus according to some example embodiments; and
Figure 9 shows a representation of an apparatus according to some example embodiments.

DETAILED DESCRIPTION

The following describes compression methods for audio signals. In particular, the following considers compression methods for audio signals that can be used for E2EE deployments.

In more detail, the following relates to a user equipment (UE) that transmits audio data to a server. The server manipulates the audio data before returning the manipulated audio data to the UE and/or before providing the manipulated audio data to another UE. The UE(s) receiving the manipulated audio data may perform further professing on the manipulated audio data to extract an audio signal for output to a user (e.g., via a speaker and/or headphones).

According to the presently described methods, the audio data transmitted to the server is formed by applying a compression algorithm and an encryption algorithm to an input audio signal, where the compression algorithm and the encryption algorithm are considered to be homomorphic. Homomorphic, as used herein, refers to a transformation of one data set into another while preserving relationships between elements in both sets. Therefore, a compression algorithm may be considered to be homomorphic when the following relationships hold:

$Decmp(Cmp(x_1) + Cmp(x_2)) \approx x_1 + x_z \approx Decmp(Cmp(x_1)) + Decmp(Cmp(x_2))$ where $x_1$ and $x_2$ are raw audio waveforms, *Cmp* is the compression function and *Decmp* is the decompression function. Analogous relationships may be expressed for homomorphic encryption algorithms, where the compression function (e.g., compression algorithm) is replaced by an encryption function (e.g., encryption algorithm) and the decompression function (decompression algorithm) is replaced by a decryption function (e.g., decryption algorithm).

In practical terms, assume there are two numbers that have been encrypted separately using a homomorphic encryption method, such as fully homomorphic encryption (FHE). Using a homomorphic encryption method allows these numbers to be added together while still encrypted such that, when the result is decrypted, the sum of the original two numbers is revealed. This process maintains the confidentiality of the data throughout the calculation process.

This is illustrated with respect to an addition operation. In this example, data ((x) and (y)) is independently encrypted into encrypted data (f(x) and f(y)) using an FHE algorithm. An addition computation is performed on the encrypted data to form a computed encrypted data (g(f(x), f(y)), where g() is an algorithm representing an addition operation that is compliant with the FHE algorithm). The computed encrypted data (g(f(x), f(y)) is then decrypted, which returns x+y.

Although more information will be provided on homomorphic algorithms and their properties later, the following provides a brief overview of example configurations for sharing audio data across a network.

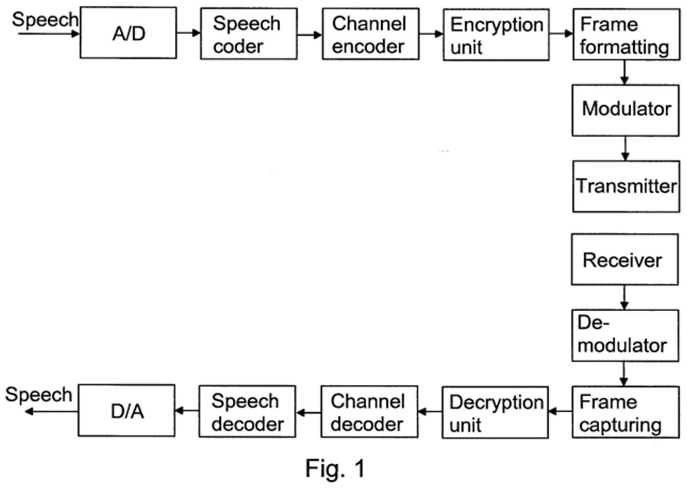

Figure 1 shows, in a simplified form, a conventional transmission chain and reception chain for speech, for instance in a digital mobile terminal or system. The transmit chain comprises a voice input, such as a microphone, an analog to digital (A/D) converter, a voice coder, a channel encoder, an encryption unit, a frame formatting unit, a modulator, and a transmitter. The voice coder outputs coded speech frames, which comprise a plurality of speech bits. The speech frames are input to the channel encoder for channel encoding using error correction and/or error detection codes. The purpose of the error coding is to enable the receiver to detect and correct bit errors that may occur during transmission. The channel encoder implements the encoding method used in a particular communications system. The speech frames may then be protected from interception by encryption. After encryption, the speech frames are formatted for transmission by a frame formatting unit. The frame formatting unit interleaves encrypted bits in the speech frames from the encryption unit, adds necessary synchronization and training bits, and assigns the resulting formatted bits to appropriate timeslots of a frame structure, for instance. The modulator modulates the resulting formatted bits to an assigned radio frequency carrier for transmission by the transmitter.

The receive chain comprises a receiver, a demodulator, a frame capturing unit, a decryption unit, a channel decoder, a voice decoder, a digital to analog (D/A) converter, and a speaker. The receiver receives the speech signals and converts the signals into a suitable format for digital processing. The demodulator demodulates the received signal and provides the demodulated bits to the frame capturing unit, which performs error detection and/or de-interleaving. The decryption unit decrypts demodulated bits received from the frame capturing unit. The decrypted bits output from decryption unit are decoded by the channel decoder. The decoded bits are then provided to the voice decoder.

There may be several apparatus according to the example of Figure 1 that are configured to participate in a same group call (e.g., a call comprising more than two participants).

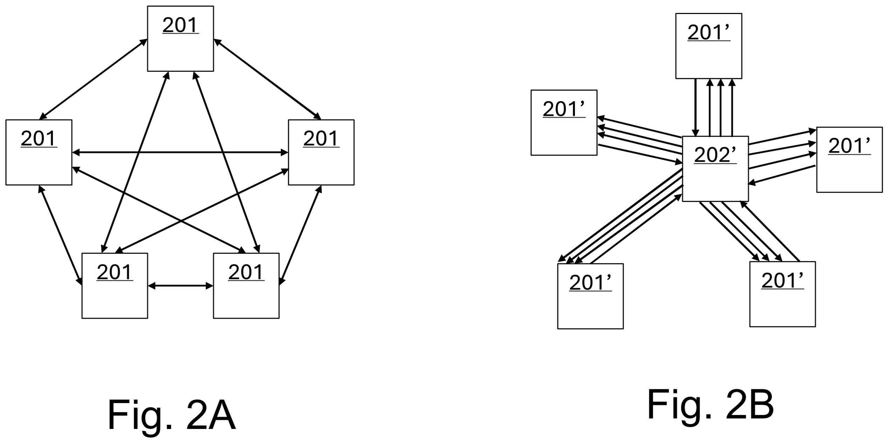

The group call may be performed using at least one of several different types of network configurations: Mesh (also called peer-to-peer (P2P)), Selective Forwarding Unit (SFU), and Multipoint Control Unit (MCU) and These are described further below with reference to Figures 2A to 2C.

Figure 2A illustrates a configuration associated with a mesh-type network configuration for implementing a group call. Figure 2A illustrates a plurality of user equipment 201, each of which is configured to separately exchange audio data for participating in a group call with every other user equipment in that group call.

Stated differently, in a mesh-based configuration in the example of Figure 2A, all user equipment are connected to each other and send each other their audio stream. Therefore, in the example of Figure 2A, which illustrates a group call (e.g., a conference call) comprising five user equipment as participants, each user equipment maintains four uplink connections to the other four user equipment, and four downlink connections from the other four user equipment. Assuming each bidirectional link (uplink and downlink) has a bandwidth of approximately 10 Megabit per second (Mbps), this implies that each user equipment uses a bandwidth of approximately 40Mbps.

As each user equipment maintains separate bitstreams for communicating with each of the other user equipment on the audio call, the bandwidth for this mesh-based configuration increases with the number of user equipment. This means that mesh-based configurations do not scale well with increasing numbers of user equipment.

Additionally, it is difficult to synchronize the audio between all these devices in this mesh-based configuration, and in practice, all clients actually hear a different kind of conversation. This is because audio is a very latency sensitive medium for humans and, depending on the physical location of the user equipment, it is difficult to achieve a consistent and seamless audio experience as variations in network latency can significantly affect the timing and quality of audio transmission. This can lead to issues such as echoes, delays and even audio segments dropping out, making it challenging to have a clear and coherent conversation.

Figure 2B illustrates an SFU-based network configuration. As illustrated in Figure 2B, there is a plurality of user equipment 201' configured to transmit audio data to, and receive audio data from a central server 202'. The central server is configured to receive respective audio data from each of the user equipment 201' participating in an audio call, and select only a portion (i.e., less than all) of the received audio data for forwarding to each of the user equipment 201'.

Stated differently, SFU may be considered to operate by receiving individual audio streams from each participant into the cloud. These streams are selected and adjusted, if necessary, and then forwarded to the correct participants. Therefore, in the example of Figure 2B, which illustrates a group call comprising five user equipment as participants, each user equipment maintains a single uplink connection to the central server 202', and up to four downlink connections from the central server (although only three downlink connections are illustrated in Figure 2B). Assuming each link has a bandwidth of approximately 5Mbps, this implies that each user equipment uses a bandwidth of approximately 25Mbps for this SFU case.

This SFU-based approach allows for more efficient use of bandwidth compared to a mesh network because not every client has to send its stream to every other client. Moreover, it offers better scalability and can maintain end-to-end encryption (E2EE) because the server does not decode the streams for mixing. However, in an E2EE setup, each participant will have to receive all individual audio feeds from the server, which increases the bandwidth per participant.

Although there are a plurality of applications that use SFU-based network configurations for telecommunication software, these applications have limited support for E2EE group calls, are limited to a small number of participants, and/or have high bandwidth requirements that scale up to the number of participants as a result of them being based on an SFU mechanism

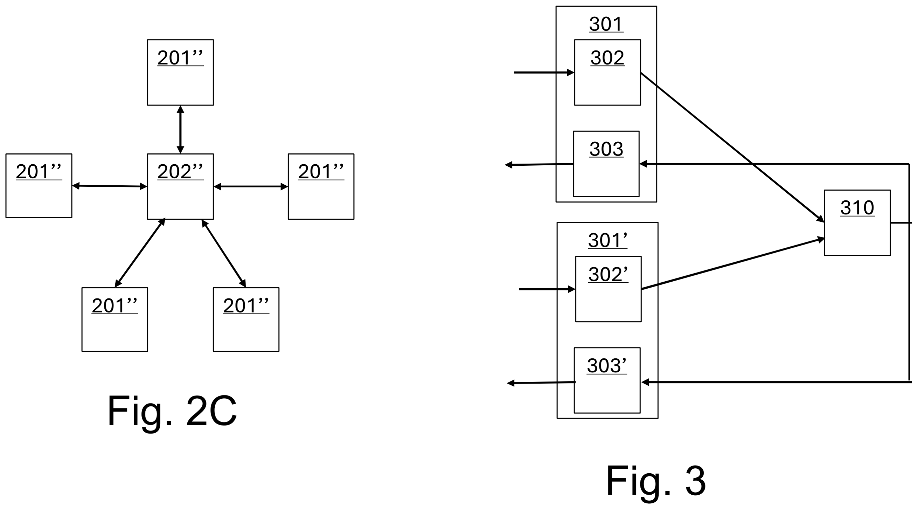

Figure 2C illustrates an example network configuration for an MCU deployment.

As shown in Figure 2C, there is a plurality of user equipment 201" configured to transmit audio data to, and receive audio data from, a central server 202". The central server is configured to receive respective audio data from each of the user equipment 201" participating in an audio call, combine the received audio data to form a combined output, and provide the combined output to each of the user equipment 201".

Therefore, in the example of Figure 2C, which illustrates a group call comprising five user equipment as participants, each user equipment maintains a single uplink connection to the central server 202", and a single downlink connection from the central server. Assuming each link has a bandwidth of approximately 5Mbps, this implies that each user equipment uses a bandwidth of approximately 10 Mbps for this MCU case.

This MCU deployment is technically the most efficient solution for audio calls as (1) all audio is neatly synchronized, (2) all participants hear the same content, and (3) it can be scaled up to many participants (e.g., using Dynamic Adaptive Streaming over Hypertext Transfer Protocol (DASH), Hypertext Transfer Protocol Live Streaming (HLS), or similar protocols).

However, this MCU deployment requires that the central server has access to the raw audio data from each participant. Often, that means the encrypted information from the participant is decrypted in the cloud at the central server (or at a trusted entity that can provide the decrypted data to the central server securely), the audio signals are mixed, and then re-encrypted to distribute the content to all participants. As all the content is readable by the central server, this invalidates the objective of E2EE.

As discussed above, for E2EE calls, the server should not be able to decode the audio streams to generate a single "mixed" audio stream in order to better protect the privacy of the communications in order to protect the privacy of the communications. Additionally, to protect the identity of the speaker in such calls, against passive network observers or the server, dummy audio signals would need to be transmitted. In other words, for E2EE compliant calls, adversaries should be unable to learn which participant is talking and who is not. This means the MCU deployments are not considered to be suitable for E2EE compliant communication protocols.

As a result of MCU network configurations not being considered suitable for E2EE compliant communication protocols, existing conferencing applications often rely on Mesh or SFU solutions that require audio signals to be received all participants to preserve the E2EE property. This means that, in existing E2EE solutions, each new participant contributes an addition outbound stream (e.g., at rate of 64kbps compressed audio data). This increment is linear. However, the total traffic generated by this addition is not linear, but rather scales with the number of participants (n). Specifically, each participant would need to receive this new stream, thereby increasing the total network traffic by n*64kbps. Therefore, the total network traffic exhibits a quadratic growth pattern, which does not scale well with increasing numbers of call participants.

Recently, researchers have considered the application of homomorphic encryption methods (e.g., fully homomorphic encryption (FHE)) for signalling data streams across a network. FHE methods convert data into ciphertext that can be analyzed and worked with as if it were still in its original form. FHE enables complex mathematical operations to be performed on encrypted data without compromising the encryption.

FHE may be especially useful for audio streaming configurations in which a central server (also referred to herein as a mediator and/or an intermediary apparatus) coordinates signalling between multiple users participating in an audio call, such as the above-described MCU deployments. This is because the MCU deployments would no longer have to access the raw, unencrypted form of the content in order to combine data from different audio streams.

Figure 3 illustrates a deployment scenario in which audio signals that have been encrypted using FHE are mixed at a server. Figure 3 illustrates a first user equipment 301, a second user equipment 301', and a server 310, where the server is located remotely from the first and second user equipment.

The first user equipment 301 is configured to receive a first audio input signal (e.g., from a microphone). The first audio input signal is input to a first FHE encryption apparatus 302 of the first user equipment 301. The first user equipment 301 further comprises a first FHE decryption apparatus 303, which is configured to output via a user interface (e.g., via a speaker). It is understood herein that the term "apparatus" may be read interchangeably with "function" and/or "algorithm" throughout the present application.

The second user equipment 301' is configured to receive a second audio input signal (e.g., from a microphone). The second audio input signal is input to a second FHE encryption apparatus 302' of the second user equipment 301'. The second user equipment 301' further comprises a second FHE decryption apparatus 303', which is configured to output via a user interface (e.g., via a speaker).

In operation, the first FHE encryption apparatus 302 and the second FHE encryption apparatus 302' are configured to output encrypted audio signals to the server 310. The server 310 performs some computations on the received encrypted audio signals to form a combined encrypted audio signal, where the encrypted audio signal comprises data from both of the received encrypted audio signals.

The combined encrypted audio signal is provided to the first FHE decryption apparatus 303 and the second FHE decryption apparatus 303', which both decrypt this combined encrypted audio signal to output via a user interface. The encrypted audio signals and the combined encrypted audio signal utilise a relatively high bandwidth for transmission to and from the server.

For completeness, the following provides a brief overview of homomorphic methods and features.

Homomorphic methods can generally be categorized into those that support parallel operations on batches of data (which are referred herein as Single Instruction, Multiple Data (SIMD)) and those specialized in performing bitwise operations.

Single Instruction, Multiple Data (SIMD), in the context of Fully Homomorphic Encryption (FHE), refers to the capability of FHE methods in which parallel operations can be performed on multiple data points simultaneously. These methods can pack multiple plaintext values into a single ciphertext, enabling a single operation, such as addition, to be performed across all packed values concurrently.

For example, assume that there are two arrays of values $x_1 = [2, 4, 3]$ and $x_2 = [3, 8, 5]$. Each value is encoded into a *slot* in the array. If $x_1$ and $x_2$ are encrypted independently using an FHE method that supports SIMD, this results in two ciphertexts $y_1$ and $y_2$. Applying FHE-based addition of $y_1$ and $y_2$ results in $y_{sum}$ with a single FHE addition operation. However, the actual addition happens simultaneously slot-wise. If the cyphertext $y_{sum}$ is decrypted, $x_{sum} = [5, 12, 8]$ is obtained, which is the same as a result of this operation: $[2 + 3, 4 + 8, 3 + 5]$.

Some known FHE methods that support SIMD operations integer and complex numbers include, for example Brakerski-Gentry-Vaikuntanathan (BGV) homomorphic encryption methods, Brakerski/Fan-Vercauteren (BFV) homomorphic encryption methods, and Cheon-Kim-Kim-Song (CKKS) homomorphic encryption methods. SIMD-based manipulation of FHE data significantly improves the efficiency of computations on FHE data because of data-level parallelism.

In contrast, Fast Fully Homomorphic Encryption (TFHE) is an example method that supports bitwise operations. TFHE is a homomorphic method that enables a much wider range of operations to be performed on encrypted data. This flexibility, however, comes with a caveat that uses a bootstrapping phase after each operation, which incurs computational overhead. In more detail, bootstrapping is a costly technique in FHE to refresh the ciphertext after being used in an operation in order to keep it usable for future operations. Current TFHE methods do not support SIMD operations, which makes them unsuitable for processing larger amounts of data in real-time applications.

There are several other factors to consider when assessing the efficiency and/or usefulness of FHE algorithms in communication protocols. These include, for example, the FHE cipertext expansion factor and Transciphering.

The FHE ciphertext expansion factor is defined by how much larger the ciphertext is compared to the original plaintext. More formally:

$$e_{fhe} = \frac{size\ (ciphertext)}{size\ (plaintext)}$$

where $e_{fhe}$ represents the FHE cipertext expansion factor.

The following will illustrate the importance of $e_{fhe}$ with respect to BFV. However, it is understood that this is merely an example and that the other types of FHE algorithms may be similarly affected by $e_{fhe}$.

In BHV algorithms, ciphertexts are composed of two polynomials of order $N$. That means each polynomial has $N$ coefficients, i.e. the polynomials are of the form:

$$C(x) = c_0 + c_1 x + \cdots + c_{N-1} x^{N-1}$$

Each coefficient is an integer in $\mathbb{Z}_q$ , which means that coefficients belong to the ring of integers modulo $q$. Therefore, each coefficient is represented by $\log_2(q)$ bits, and as a result, the polynomial C by $\log_2(q) \cdot N$ bits. Each BFV ciphertext is composed of two polynomials: $(C_1, C_2)$. The expansion factor may consequently be found using:

$$e_{fhe} \approx \frac{2 \cdot N \cdot \log_2(q)}{N \cdot \log_2(t)} \approx \frac{2 \cdot \log_2(q)}{\log_2(t)}$$

Where t represents the plaintext modulus (e.g., such that log(t) presents a bit size of an input).

Transciphering is an important concept in FHE for reducing the expansion factor corresponding to a specific FHE algorithm. Transciphering is also referred to as Hybrid Homomorphic Encryption.

Transciphering is a technique to convert a ciphertext under one encryption method to a ciphertext under another encryption method. FHE ciphertexts are considered large. Therefore, for instance, Transciphering enables the conversion of FHE ciphertext to a relatively light-weight ciphertext (e.g., "Advanced Encryption Standard (AES)) for transmission across a network. As a result, Transciphering is a common technique to reduce the expansion factor of FHE encryption. FHE ciphertext size is often very large compared to its underlying message. In the worst case, 1 bit might result in 2.5KB of ciphertext.

Transciphering leverages block/stream ciphers for encrypting the message (with an expansion factor close to 1), and then let the server transform the message into FHE ciphertext by running its decryption homomorphically. This could achieve (almost) optimal communication costs for uncompressed data. For example, FiLIP (1 bit), a transciphering scheme that aims to reduce the expansion factor of FHE, has an approximate transciphering cost of 2.62ms. The computational overhead is expected to improve in future work and by leveraging hardware acceleration.

The deployment illustrated with respect to Figure 3 has been considered for several different use cases.

For example, in some recent examples, server-side audio mixing using FHE has been considered in the context of Voice over Internet Protocol (VoIP) teleconferencing. In more detail, an audio encoding approach has been introduced to reduce the multiplicative depth needed to support the homomorphic mixing of the VoIP data. This is performed using a custom FHE method, which is not the same as the current standardization efforts which aims to be compatible with a range of different FHE methods.

As another example, performance testing has been performed on a similar idea as the preceding paragraph, but using mainstream FHE methods (such as, for example BGV-based, BFV-based and CKKS-based algorithms). This performance testing was performed based on a mixing at the server that is based on the Dijk-Gentry-Halevi-Vaikutanathan (DGHV) homomorphic method, which is not included in current standardization efforts because of its unacceptable performance for group calls.

By using FHE methods, MCU deployments may be supported as the server may "mix" audio signals at the server side without requiring the decryption at the server side (in contrast to current MCU deployments). Therefore, to mix audio in a privacy preserving way, multiple streams of audio samples can simply be added together in FHE.

Unfortunately, FHE methods add significant bandwidth overhead to audio communications. Under initial estimates, using FHE would consume around 50Mbps of bandwidth in total, which is impractical for adoption at scale. Moreover, it is not currently possible to compress the audio signals for FHE, as compression and decompression apparatus are highly non-linear and are not amenable for real-time processing when FHE methods are also deployed. Therefore, FHE has been deemed impractical for group audio calls.

In more detail, FHE-based deployments are not able to decompress, mix, and recompress the audio signal in real-time. In particular, compression and decompression algorithms would consume much more than the typical noise budget of typical BGV, BFV or CKKS methods as many operations would need to happen in the encrypted domain at the server side. Therefore, the current encryption apparatus operate on non-compressed audio signals, which incur high bandwidth overheads. It should be noted that FHE methods add an additional 8 times to 10 times bandwidth overhead compared to transmitting non-compressed audio signals. Alternatively, other methods like TFHE would be able to support decompression and compression capabilities, but existing work cannot perform these operations in real-time.

The following aims to address one or more of the above-mentioned issues.

For example, the following aims to describe a configuration that may be used for E2EE for audio communication, and that can also scale to a large group of participants in view of bandwidth requirements available for the audio communication.

As part of this, the following proposes compression apparatus having homomorphic properties. The compression apparatus may be configured such that summation of the compressed representations is approximately homomorphic to the summation of audio waveforms. This property of the compression apparatus will be referred to herein as the additive compression homomorphism (ACH), and may be expressed as:

$$Decmp(Cmp(x_1) + Cmp(x_2)) \approx x_1 + x_2 \approx Decmp\big(Cmp(x_1)\big) + Decmp\big(Cmp(x_2)\big)$$

where $x_1$ and $x_2$ are raw audio waveforms, *Cmp* is the compression apparatus and *Decmp* is the decompression apparatus.

This ACH property does not hold for all signal processing-based compression methods in general. This is due to factors such as the inclusion of a quantization step or parameterizations in some compression apparatus.

Stated differently, for transmission apparatus comprising quantisers for compression (such as Vector quantised variational autoencoders (VQ-VAEs)), the ACH-compliant property does not hold as a result of the vector quantization step. Stated differently, for VQ-VAEs:

$$z_1 + z_2 \approx e_{k1} + e_{k2} \not\approx e_{k1+k2}$$

Where $z_i$ is an embedding vector computed by the encoder for audio signal i, $e_{ki}$ is the vector in the codebook of the vector quantiser that is closest to z_i, and $k_i$ is the index of, $e_{ki}$ in the codebook (i.e., $e_{ki}$ is the $k_i$-th vector in the codebook).

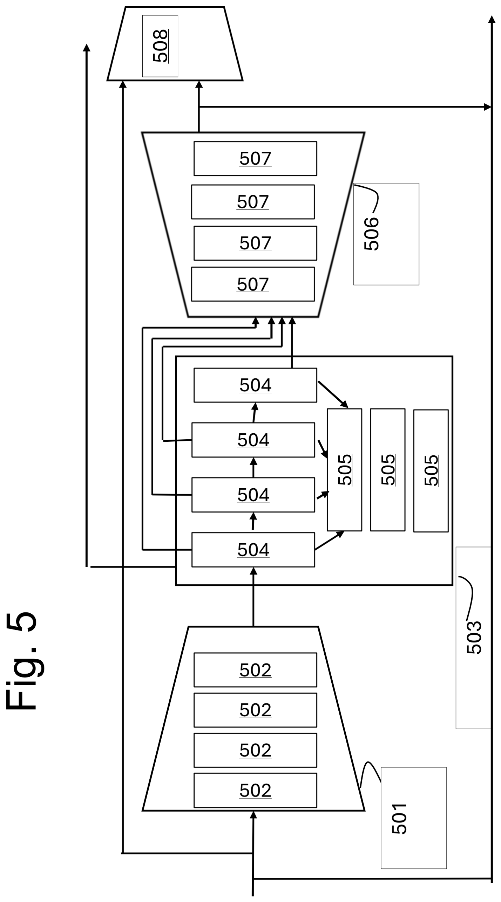

Quantisers, and VQ-VAEs in particular, are described further below in relation to the implementation example of Figure 5.

In contrast to current transmission apparatus, the presently described techniques recognises that the output of the compression apparatus (e.g., before vector quantization) is already a compressed representation of the audio and so quantizers in the compression apparatus may be omitted from the presently disclosed compression apparatus. Stated differently, the following proposes an encoder-decoder architecture having a compression apparatus without VQ-VAEs, and for which: 1) the encoder sufficiently compresses the audio signal to make FHE audio mixing feasible, and 2) the ACH property holds. As an aside, it is noted that for 2) to be fulfilled in general, known VQ-VAEs should be omitted from compression apparatus.

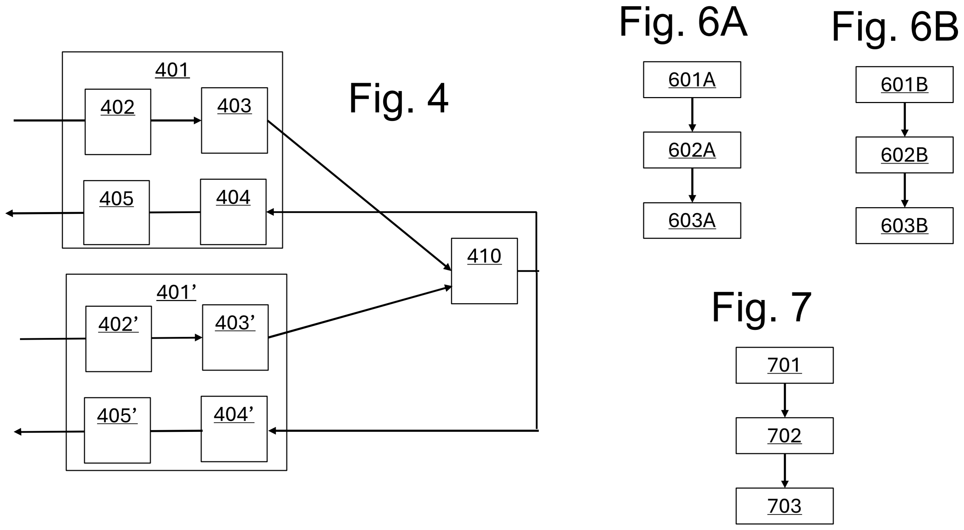

Figure 4 illustrates an implementation method for the presently described techniques, and illustrates further differences between the presently described techniques and the method of Figure 3.

Figure 4 illustrates a first user equipment 401, a second user equipment 401', and a server 410, where the server is located remotely from the first and second user equipment.

The first user equipment 401 is configured to receive a first audio input signal (e.g., from a microphone). The first audio input signal is input to a first ACH-based compression apparatus 402, which compresses the first audio signal and outputs the resulting signal to a first FHE encryption apparatus 403. The first FHE encryption apparatus 403 is configured to perform an FHE-based encryption on a signal output by the first ACH-based compression apparatus 402 to output a first encrypted audio signal. The first user equipment 401 further comprises a first FHE decryption apparatus 404, which is configured to output to a first ACH-based decompression apparatus 405. The first ACH-based decompression apparatus performs decompression on signal received from the first FHE decryption apparatus, and outputs via a user interface (e.g., via a speaker).

The second user equipment 401' is configured to receive a second audio input signal (e.g., from a microphone). The second audio input signal is input to a second ACH-based compression apparatus 402', which compresses the first audio signal and outputs the resulting signal to a second FHE encryption apparatus 403'. The second FHE encryption apparatus 403' is configured to perform an FHE-based encryption on a signal output by the second ACH-based compression apparatus 402' to output a second encrypted audio signal. The second user equipment 401' further comprises a first FHE decryption apparatus 404', which is configured to output to a second ACH-based decompression apparatus 405'. The second ACH-based decompression apparatus performs decompression on signal received from the second FHE decryption apparatus, and outputs via a user interface (e.g., via a speaker).

In operation, the first FHE encryption apparatus 402 and the second FHE encryption apparatus 402' are configured to output encrypted audio signals to the server 410. The server 410 performs some computations on the received encrypted audio signals to form a combined encrypted audio signal, where the encrypted audio signal comprises data from both of the received encrypted audio signals. The combined encrypted audio signal is provided to the first FHE decryption apparatus 403 and the second FHE decryption apparatus 403', which both decrypt this combined encrypted audio signal to output to their respective ACH-based decompression apparatus. The encrypted audio signals and the combined encrypted audio signal utilise a lower bandwidth for transmission to and from the server than used in Figure 3.

The following methods may be performed by one or more apparatus of Figure 4.

First, raw audio signals of x_1 and x_2 of the respective participants are ACH-compliantly compressed by the first compression apparatus 402 into sequences of embeddings z_1 and z_2 , respectively. The number of embeddings that the encoder generates per second audio is denoted herein by f_emb and the dimensionality of the embeddings is denoted by d_emb.

Second, the compressed audio signal (e.g., the embeddings z_1, z_2) is encrypted by the first encryption apparatus 403 using an FHE method, and the resulting output from the first encryption apparatus is sent to the server 410. In the present example, the FHE method may support addition in batches of size b with SIMD operations being further supported by FHE methods.

Third. the server 410 processes the received audio signals (e.g., to add them together) homomorphically, or performs some other FHE-compatible operation. The processed signals are subsequently sent to each participant. It is understood that although in the present example, all participants in the audio call receive the same audio, that the server may be configured to apply different processing per participant and/or per group of participants. This may be useful, for example, for better manipulating the spatial audio settings to account for a different position of the participants, or for taking into account different volume levels.

Fourth, the UE 401, 401' respectively decrypt the sum (or processed version) of the signal received from the server in their respective first and second decryption apparatus 404, 404', and outputs the decrypted audio signals to the decompression apparatus.

Fifth, the first and second decompression apparatus 405, 405' convert the encodings into an audio waveform. Assuming that the encoder-decoder is ACH-compliant, then the result output from these decompression apparatus 405, 405' approximately equals x_1+x_2.

The example compression apparatus of Figure 4 may be configured to dynamically account for changing parameters, such as bandwidth, jitter, and/or latency. These parameters may change in response to different types of FHE algorithms being used, in addition to changing in response to current network conditions.

The following further illustrates factors that may be considered by the compression apparatus when determining a value for one or more parameters used in performing compression in light of changing parameter values.

For example, to make real-time audio mixing practical, minimizing latency and bandwidth is paramount. The encoder-decoder architecture described herein may therefore be configured to find an optimal tradeoff between a low bandwidth, low latency, and small compression error.

Bandwidth and latency may be expressed in terms of the embedding frequency $f_{emb}$, embedding dimensionality $d_{emb}$, and the FHE batch size $b$ of the FHE encryption algorithm.

Based on this, a lower bound for the latency as the product of the number of embeddings / batch $n_{emb/b}$ and the number of seconds audio a single embedding corresponds to ( $f_{emb}^{-1}$ ):

$$latency > n_{emb/b} * f_{emb}^{-1}.$$

This equation may be considered as providing a lower bound for the latency because it does not account for the network latency and the inference latency of the encoder/decoder models

The FHE batch size b and embedding dimension $d_{emb}$ define an upper bound on $n_{emb/b}$:

$$n_{emb/b} \leq \left\lfloor \frac{b}{d_{emb}} \right\rfloor$$

This equation may be considered as providing an upper bound as, to optimize latency (at the cost of bandwidth), not all FHW slots may be filled.

The bandwidth used for transmission of the FHE-encrypted audio signal can be factorized in a number of embeddings per second $f_{emb}$, a number of batches per embedding $(n_{emb/b})^{-1}$, and a number of bits per batch $n_{bits/b}$:

$$bandwidth = f_{emb} * \left(n_{emb/b}\right)^{-1} * n_{bits/b}.$$

Where $n_{bits/b}$ can be factorized in the FHE batch size, the FHE expansion factor $(e_{fhe})$ and the bit depth (i.e., the number of bits per entry in the embedding vector):

$$n_{bits/b} = b * e_{fhe} * depth.$$

For real-time audio streaming the latency may have a maximum latency of $\approx 0.25s$ (depending on the use case) and a maximum bandwidth of $\approx 1Mbs$ (depending on the use case). These values may represent example target requirements for or low-to-modest quality real-time audio conversations. For other use cases latency requirements may be more stringent. For example, acoustic echo cancellation sometimes considers latency requirements of 40 ms. In contrast, for known FHE, libraries, the smallest supported batch size b is 4096 and the expansion factor $e_{fhe}$ is approximately 10. The bit depth may be set at, for example, 8bits. Plugging such values in the above equations allows the apparatus to find suitable ranges for $f_{emb}$ and $d_{emb}$.

The above example of Figure 4 illustrated audio mixing being performed at the server by a relatively straightforward addition-based algorithm. However, it is understood that this was merely an example, and that audio mixing methods that use other (e.g., more complicated) types of computation algorithms may be deployed in addition to and/or instead of this addition-based algorithm. This may be useful, for example, to allow deployments in which there are a large number of user equipments (e.g., participants). In the present context, the large number of user equipments may comprise three or more.

For example, at least the following the different types of computation algorithms that may be used for audio mixing in the presently described techniques:

a) addition: $x_1 + x_2$
b) addition and normalization: $g_1 x_1 + g_2 x_2$
c) addition and non-linear / dynamic range compression: $g_1(x_1) x_1 + g_2(x_2) x_2$
d) addition and context-based weighting: $g_1(F_1, F_2)x_1 + g_2(F_1, F_2)x_2$

The addition & non-linear / dynamic range compression audio mixing may be performed as follows.

First, each participant (i) may apply audio normalization (e.g., root mean square (RMS)), which produces a signal $x_i$ and a scaling factor $F_i$.

Second, each participant encrypts their scaling factor $F_i$ with regular AES symmetric encryption into $\overline{F}_i$.

Third, the server acts as a relay for all received encrypted scaling factors $\overline{F}_i$, such that each participant receives all $\overline{F}_i$ except their own.

Fourth, each participant computes a sum of the received $\overline{F}_i$ and their own $\overline{F}_i$ to obtain $\overline{F}_{sum}$, and further computes the average scale.

Fifth, each participant first decrypts and then decompresses the mixed audio signal, before applying the scaling factors accordingly.

The addition & context-based weighting audio mixing may be useful when a vendor of an audio mixer performed at a remote server would like to further differentiate their product by deciding. The addition & context-based weighting audio mixing of d) may be implemented as follows.

First, each participant (i) may apply audio normalization (e.g., root mean square (RMS)), which produces a signal $x_i$ and a scaling factor $\overline{F}_i$.

Second, each participant encrypts their scaling factor $F_i$ and/or one or more other features of the signal (such as, for example, as magnitude, means, peaks, etc.) with regular AES symmetric encryption into $\overline{F}_i$. These features may be extracted from, for example, the unnormalized signal.

Third, the server decrypts $\overline{F}_i$ into $\overline{F}_i$.

Fourth, the server transforms the scaling factors $\overline{F}i$ into one or more proprietary scaling factors of the vendor. For example, a function $g(F_1,..., F_n)$, can take into account the scaling of all other participants.

Fifth, the server performs audio mixing in the FHE domain by multiplying the proprietary scaling factor with the encrypted signal. For two participants this looks as follows:

$$g(F_1, F_2) * \overline{c}_1 + g(F_1, F_2) * \overline{c}_2$$

where $\overline{c}_i = E_{fhe}(X_i)$
where $c_1$ is the encrypted version of the signal $x_1$ (e.g., $c_1$ is the ciphertext), and $E_{fhe}$ is the encryption function.

It is noted that this method may include any arbitrary proprietary scaling functions (g). The vendor (e.g., the operator of the server) can also decide to optionally rescale this value by dividing with $(\overline{F}_1{}^2 + \overline{F}_2{}^2)$

Sixth, the encrypted mixed signal $(c_i)$ is sent to the participants.

Seventh, each participant first decrypts and then decompresses the mixed audio signal. Each participant may also perform further audio normalization locally.

Although the above illustrates several example computation examples that may be performed by a server, it is understood that the presently described techniques are not limited to just these computations.

Stated differently, other processing steps that can be considered at the server. In the context of spatial audio, alternative operations may also be feasible. For example, processing signals using head-related transfer functions based on the participants' positions or adding room reverberation based on the room acoustics of the participants may also or alternatively be processed at the server. The presently described techniques may also be applied in respect of the server performing FHE transciphering techniques, which could further reduce the bandwidth requirements considerably, at the cost of more computation at the server side

The following illustrates an implementation example of an ACH-compliant compression encoder-decoder architecture that can be used for FHE audio mixing according to the presently described methods. This ACH-compliant compression encoder-decoder architecture is described with reference to a neural audio compression (NAC) model.

Prior to illustrating the ACH-compliant compression encoder-decoder architecture, an example of a general NAC model is first described with reference to Figure 5, before example changes to this NAC model for rendering it as ACH-compliant. It is understood that other types of compression apparatus may be used other than that described in this NAC model, provided that they fulfil the above-mentioned features for being ACH compliant.

For (near) real-time speech transmission, low latency and efficient bandwidth usage are crucial. Therefore, lossy audio compression algorithms, which achieve higher compression rates than their lossless counterparts, are common.

Lossy audio compression techniques can be divided in two families: 1) signal processing-based compression; and 2) neural audio compression (NAC). The methods in family 1) use hand-crafted methods to reduce noise from the audio signal and feed the resulting audio representations to general-purpose compression algorithms such as Linear Predictive Coding and Huffman coding. Examples are the Opus and advanced audio coding (AAC) codecs.

Neural audio compression (NAC) is a relatively new approach in which preset algorithms are traded for neural networks that are able learn to compress/decompress audio in a data-driven fashion. An encoder network learns to compress data in a representation that a decoder network learns to decompress. Figure 5 illustrates an example NAC model that is based on EnCodec, which is a real-time, audio codec leveraging neural networks. EnCodec describes a streaming encoder-decoder architecture with quantized latent space trained in an end-to-end fashion.

As shown in Figure 5, there is provided an encoder 501 comprising a plurality of convolutional block encoders 502, a residual vector quantizer 503 comprising a plurality of vector quantisation apparatus 504 and a plurality of transformers 505, a decoder 506 comprising a plurality of convolutional block decoders 507, and a discriminator 508.

At inference time, the encoder 501 converts a received waveform into a latent representation, where a latent representation is a simplified model of the input data (e.g., the received waveform). The latent representation is then quantized by the residual vector quantizer 503. The decoder 506 will dequantize the output of the residual vector quantizer 503 and convert the latent representation back to an audio waveform close to the original signal.

The discriminator 508 may be used during training. Therefore, the following will concentrate on the encoder, quantizer and decoder, as these are the apparatus that will be used during main operation.

In the example of Figure 5, the encoder is a convolutional neural network (CNN). This example is illustrated as CNNs are currently the de facto choice for audio compression because they are efficient to implement on modern hardware (e.g., its computations are easy-to-parallelize) and demonstrate good sequence modelling capabilities. However, it is understood that although CNNs are illustrated in the following example, other types of architectures may be used as the encoder and/or decoder. For example, another popular architecture for sequence modelling includes selective state spaces, which utilise modelling power of transformers with a linear complexity. As such, an architecture based on selective state spaces could be worth considering for an NAC.

A neural network may be considered to be an artificial mathematical model used to approximate nonlinear functions. Neurons (also referred to herein as "nodes) in an artificial neural network are usually arranged into layers, with information passing from the first layer (the input layer) through one or more intermediate layers (the hidden layers) to the final layer (the output layer). The "signal" input to each neuron is a number, specifically a linear combination of the outputs of the connected neurons in the previous layer. The signal each neuron outputs is calculated from this number, according to its activation function. The behaviour of the network depends on the strengths (or weights) of the connections between neurons. Stated differently, each layer in a neural network comprises one or more nodes, with each node connecting to another node and having an associated weight and threshold. A neural network is trained by modifying these weights to minimize empirical risk using backpropagation in order to fit some preexisting dataset.

A CNN is a type of feed-forward neural network that learns features by itself via filter (or kernel) optimization.

In more detail, in a convolutional neural network, the hidden layers include one or more layers that perform convolutions. In general, a convolution may be considered a mathematical operation on two functions (e.g., $f$ and $g$) that produces a third function (e.g., $h=f*g$). Stated differently, the convolution may be considered to be the product of the two functions after one is reflected about the y-axis and shifted. The term convolution refers to both the result function and to the process of computing it.

To perform a convolution, a combination of a kernel and a stride is defined.

A "kernel" (also referred to as a filter) functions as a feature detector for the data. The kernel may be considered as a window (e.g., an array) that defines a part of data that is being analysed during a single iteration at that node.

A "stride" is a distance that the kernel moves over the input matrix. A larger stride yields a smaller output (e.g., as fewer moves of the kernel/filter are performed).

In operation, neural compression aims to transform a data type (e.g., pixels for images, waveforms for audio, and/or frame sequences for video) into a more compact (e.g., vector) representation. To achieve this, a neural compression encoder receives an input (e.g., a pixel, waveform, and/or frame) and maps it to a vector, where the vector is a representation of the input. The representation is also known as an embedding. The representation/vector may be used by a decoder to reconstruct the original waveform.

With respect to audio applications, an audio encoder translates a digital audio signal into a given content format. The goal is to maintain the original qualities of the sound while reducing file size and bitrate.

**As** audio signals have a very high information density and require high-dimensional vectors to be represented correctly, quantization techniques to reduce the dimensionality of these vectors are therefore used.

In the example of Figure 5, the encoder converts each fixed-length audio input into a vector of a pre-determined fixed dimensionality. The quantizer then compresses this encoded vector through a process known as Residual Vector Quantization.

The audio signal may be fed directly to the encoder in the time domain by sampling the audio wave at 16kHz or more. Alternatively, the audio signal may be mapped to an intermediate, lower-resolution representation first (e.g., a so-called "Mel spectrum"). Mapping to a lower-resolution representation reduces the amount of computation performed in the encoder network.

The output of the encoder is a series of real-valued vectors (or embeddings).

NAC models are Vector Quantized Variational Autoencoders (VQ-VAEs). They quantize embeddings before sending them to the decoder using vector quantization.

In non-residual vector quantisation, the quantizer may perform this compression by comparing an input vector received from the encoder to a codebook table containing a fixed number of learnable vectors of the same dimension. The input vector is compared with those in the codebook, and the index of the most similar input vector is selected. The index value is then signalled to the decoder, which may use the index to reconstruct it into an audio stream.

This quantisation may be refined using residual vector quantisation, which utilises a cascade of codebooks (e.g., a primary codebook, a secondary codebook, etc.). The primary codebook offers a first-order quantization of the input vector. The residuals, or the differences between the data vectors and their quantized representations, are then further quantized using a secondary codebook. This layered approach continues, with each stage focusing on the residuals from the previous stage. Eventually, an index value is output that corresponds to (e.g., represents) the input vector. As in the preceding paragraph, the index value is then signalled to the decoder, which may use the index to reconstruct it into an audio stream.

Vector quantization maps an embedding $Z \in R^D$ to an integer $k \in [1,...,K]$ using a set of K latent embedding vectors $e\_i \in R^D, i \in [1,...,K]$ by finding the latent embedding vector $e\_k$ that is closest to z. Where z is one of the embeddings produced by the encoder network, and the latent vectors $e\_1,...,e\_K$ are model parameters that are trained with the encoder and decoder networks. During decoding k will be mapped back to $e\_(k)$ (with $e\_k \approx z$).

Vector quantization serves multiple purposes: it further compresses the audio signal and avoids the posterior collapse issue from variational autoencoders that use a continuous latent space.

During a training stage, the reconstructed audio is then compared to the original using a discriminator component. The discriminator measures the numerical difference between the two, called discriminator/generator losses.

In more detail, in the example of Figure 5, the first encoder layer is a 1D convolution with 32 channels and a kernel size of 7. The output of the first encoder layer is output to four convolutional blocks. Each convolutional block comprises: a residual unit comprising a) two convolutions with stride 1, kernel size 3, and the same number of channels as its input; and b) a skip-connection, and a strided convolution with stride S and a kernel size of 2*S, and twice the number of channels as its input. It is in this layer that the input signal is down sampled: a stride of S will reduce the length of the input signal from $l_{input}$ to $l_{input}/S$.

In the present example, the strides that are used in the strided convolutions are set to 2, 4, 5, 8, respectively. For a given sampling rate of the input waveform, these hyper-parameters uniquely determine the embedding frequency $f_{emb}$.

For instance, for audio at 24kHz $f_{emb} = \frac{24k}{2*4*5*8} = 75\ emb/s$

Next follows a two-layer long short term memory (LSTM), which is another type of neural network process. The final layer is again a 1D convolution with stride 1, kernel size 7 and $d_{emb}$ = 128 output channels. For the presently described principles, the most relevant hyper-parameters are the strides (e.g., (2, 4, 5, 8)) and the output channel of the final layer (e.g., $d_{emb}$ = 128) as they influence bandwidth and latency.

The decoder 506 is also illustrated as being a CNN, and performs mirrored operations to those performed by the encoder. For example, instead of strided convolutions, a CNN decoder uses transposed convolutions, which up sample the signal with strides in the reverse order. That is, the convolution blocks 507 of the decoder 506 use transposed convolutions with strides 8, 5, 4, 2 respectively.

The following illustrates changes that may be made to the EnCodec architecture of Figure 5 for compliance with the presently described principles.

First, the residual vector quantiser is omitted as it is not ACH compliant.

Second, the strides are changed in the strided convolutions of the encoder and transposed convolutions in the decoder based on the representative parameter value and constraints.

It is understood that although the presently described principles may work without adapting the strides of the EnCodec architecture, this would likely violate a latency constraint of the audio codec. For example, not adapting the strides would result in an embedding frequency of $f_{emb}$ = 75 *emb/s.* If all 4096 FHE slots of subsequently filled, then using $d_{emb}$ = 128, this would result in a bandwidth of 780kbs and a latency of 0.427s, which violates the latency constraint.

In general, latency may reduced in a plurality of different ways.

For example, latency may be reduced by:

1) lowering the number of embeddings per batch by not filling all FHE slots: This technique may be considered wasteful in the sense that the encoder compresses the data more than needed. Compressing data more than necessary should be avoided because it makes it harder to satisfy the ACH constraint. However, this technique is advantageous in that it can be done dynamically (e.g., after training the network), depending on the network connectivity properties.

2) lowering the number of embeddings per batch by increasing the embedding dimension $d_{emb}$: This technique may reduce latency without a larger $d_{emb}$, and so empty slots in the FHE batch can be avoided, but only when $d_{emb}$ is a divisor of the batch size. For b=4096, this means multiplying $d_{emb}$ with a power of two (e.g., 128, 256, ...). For instance, for the above-mentioned example, $d_{emb}$ = 256 halves the latency to 0.213s, but doubles the bandwidth to 1.2 Mbs.

3) increasing the embedding frequency $f_{emb}$ by using different strides: This technique allows a reduction in latency by reducing the amount of compression along the time dimension and provides a fine-grained control over the latency

All three techniques of these techniques provide a trade-off bandwidth and latency.

Therefore, based on the above, the following considers a reduction in latency by changing the strides. At least two options for performing this are illustrated below for a 24kHz input signal with FHE batches of b=4096.

The first option considers an optimisation based on bandwidth considerations.

In this first option example, stride values for the respective encoder convolution blocks are set to 2, 4, 4, 8, and stride values for the respective decoder convolution blocks are updated to 8, 4, 4, 2. This results in an embedding frequency of $f_{emb} = \dfrac{24k}{2*4*4*8} = 94\ emb/s$ ; a bandwidth of 770 kbs and a latency of 0.340s.

The second option considers an optimisation based on latency considerations.

In this second option example, stride values for the respective encoder convolution blocks are set to 2, 3, 4, 8, and stride values for the respective decoder convolution blocks are updated to 8, 4, 3, 2. This results in an embedding frequency of $f_{emb} = \dfrac{24k}{2*3*4*8} = 125\ emb/s$ , which is associated with a bandwidth of 1024 kbs and a latency of 0.256s (e.g., a higher bandwidth but a lower latency than the first option example).

It is understood that the values used in these examples are merely an example, and that other values may be used. For example, reductions in the size of FHE batch sizes may be made to further reduce bandwidth requirements. However, the presently described principles may be applied in respect of these other values.

During training, the presently described model architecture and training objective can be borrowed from known NAC configurations, such as EnCodec. To further improve ACH compliance, the architecture may further explicitly train for audio mixing context. The training objective may then include a term to minimize the distance between *Dec(Enc($x_1$)* + *Enc($x_2$))* and $x_1 + x_2$.

The following examples of Figures 6A to 7 illustrate features of the above examples that may be performed by respective apparatus. It is therefore understood that one or more of the following features may be better understood in the context of the above implementation examples.

Figure 6A illustrates a method that may be performed by an apparatus. The apparatus may comprise hardware configured to perform one or more of the features of 601A to 603A. The apparatus may comprise software configured to perform one or more of the features of 601A to 603A. The apparatus may comprise at least part of an encoder. The apparatus may comprise an entity configured to implement a compression algorithm and an encryption algorithm. The apparatus may be comprised in an user equipment, although it is understood that the apparatus may be comprised in any apparatus that is configured to implement E2EE for audio signals communicated with another apparatus.

During 601A, the apparatus obtains at least one audio signal.

The at least one audio signal may be obtained from any appropriate source. For example, the at least one audio signal may be obtained from at least one microphone operatively connected to the apparatus. As another example, the at least one audio signal may be obtained from data storage operatively connected to the apparatus.

During 602A, the apparatus compresses the at least one audio signal using at least one first algorithm to output at least one compressed audio signal, wherein a summation of two or more compressed audio signals is largely (e.g., approximately, considered to be, treatable as, etc.) homomorphic to a summation of two or more audio signals.

Stated differently, during 602A, the apparatus compresses the at least one audio signal using the first algorithm to output at least one compressed audio signal, wherein a summation of two or more of said compressed audio signals is considered to be homomorphic to a summation of two or more of said audio signals that correspond to said two or more of said compressed audio signals.

The summation may be considered to be homomorphic when, assuming the at least one audio signal is provided to a server apparatus that performs a computation on the at least one audio signal and passes the resulting signal to a decompression and decryption apparatus, the audio signal output by the decompression apparatus is equivalent to an audio signal that would have been obtained if the server operations would had been performed on uncompressed data. In this context, the term "equivalent" may be understood to refer to the maintenance of data relationships within the original audio signal (e.g., the intonation of the speakers, the voice of the speakers, etc.).

As another example, assuming there are two signals v' and w', where:

$$v' = decompress(compress(a)+compress(b))$$

$$w' = a+b$$

the algorithm may be considered to be homomorphic when the audio quality difference between these two signals is less that a threshold value. The audio quality difference may be quantified using any appropriate metrics, such as, for example, at least one of: Perceptual Evaluation of Speech Quality (PESQ), Short-Time Objective Intelligibility (STOI), Mean Opinion Score (MOS), Deep Noise Suppression Mean Opinion Score (DNSMOS), etc.).

During 603A, the apparatus encrypts the at least one compressed audio signal using a homomorphic encryption algorithm to form at least one encrypted audio signal.

The apparatus may provide (e.g., transmit) the at least one encrypted audio signal to a server.

The apparatus may dynamically configure the at least one first algorithm (e.g., at least one compression algorithm) based on the service requirements associated with transmission of the audio signal.

For example, the apparatus may identify one or more characteristics and/or requirements of a service corresponding to the at least one audio signal, and select first respective value(s) for one or more parameters of the at least one first algorithm based on the identifying.

The one or more characteristics and/or requirements of a service may be determined with reference to a service policy for an audio stream to which the at least one audio signal is associated. The service policy may define one or more minimum requirements that are to be fulfilled by the transmission of the at least one audio signal and/or by the transmission of the audio stream.

The one or more characteristics and/or requirements comprise one or more of: a bandwidth available for transmission of the at least one encrypted audio signal; a bandwidth available for receiving at least one other encrypted audio signal; a quality of service associated with said service; a quality of experience associated with said service; a channel quality available for uplink transmission; or a channel quality available for downlink transmission. Example quality of service metrics may relate to, for example, a latency, and/or a jitter of a transmission of the at least one encrypted audio signal and/or the audio stream.

The apparatus may additionally or alternatively dynamically configure the at least one first algorithm (e.g., at least one compression algorithm) based on which homomorphic encryption algorithm is used to perform the encryption and/or the configuration of such a homomorphic algorithm (e.g., the expansion factor associated with the homomorphic encryption algorithm).

For example, the apparatus may identify the homomorphic encryption algorithm and/or one or more parameters of the homomorphic encryption algorithm, and selecting second respective value(s) for one or more parameters of the at least one first algorithm based on the identifying.

The apparatus may send said first and/or second respective value(s) to a server. The server may usefully provide said first and/or second respective value(s) to a decompression apparatus (such as an apparatus described below in relation to Figure 6B).

The first algorithm may comprise a neural audio compression algorithm that is configured to output compressed audio signals that are compliant with the homomorphic property of Figure 6A.

As mentioned above, the at least one first algorithm may not comprise vector quantisation as part of the compressing. Stated differently, vector quantisation may not performed by the apparatus on said at least one audio signal during said compressing.

The apparatus may normalise the at least one compressed audio signal or the at least one audio signal using a scaling factor, and provide the scaling factor and the at least one encrypted signal to a server. This may be as described above in relation to at least one of the examples of b) to c) of the above-mentioned audio processing techniques that may be performed at a server.

Figure 6B illustrates a method that may be performed by an apparatus. The apparatus may comprise hardware configured to perform one or more of the features of 601B to 603B. The apparatus may comprise software configured to perform one or more of the features of 601B to 603B. The apparatus may comprise at least part of a decoder. The apparatus may comprise an entity configured to implement a decompression algorithm and a decryption algorithm. The apparatus may be comprised in a user equipment, although it is understood that the apparatus may be comprised in any apparatus that is configured to implement E2EE for audio signals communicated with another apparatus.

During 601B, the apparatus obtains at least one encrypted audio signal. The apparatus may obtain the at least one encrypted audio signal from a server (such as a server comprising the apparatus of Figure 7).

During 602B, the apparatus decrypts the at least one compressed audio signal using a homomorphic encryption algorithm to form at least one decrypted audio signal.

During 603B, the apparatus decompresses the at least one decrypted audio signal using at least one first algorithm to output at least one decompressed audio signal, wherein a summation of two or more decrypted audio signals is largely homomorphic to a summation of two or more decompressed audio signals. The summation may be considered to be largely homomorphic using the same or analogous criteria as described above in relation to 602A.

Analogous to the above example of Figure 6A, the first algorithm of Figure 6B (e.g., the decompression algorithm) may dynamically vary based on the parameters used for the first algorithm of Figure 6A (e.g., of the compression algorithm). The apparatus of Figure 6B may determine the parameters for its first algorithm using the first and/or second values received from the server (as described above), and/or may determine the parameters for its first algorithm using other data.

For example, the apparatus may receive, from a server, third respective value(s) for one or more parameters of the at least one first algorithm.

For example, the apparatus may identify one or more characteristics and/or requirements of a service corresponding to the at least one encrypted audio signal, and select first respective value(s) for one or more parameters of the at least one first algorithm based on the identifying.

The one or more characteristics and/or requirements may be as described above. For example, as described above, the one or more characteristics and/or requirements may comprise one or more of: a bandwidth available for transmission of the at least one encrypted audio signal; a bandwidth available for receiving at least one other encrypted audio signal; a quality of service associated with said service; a quality of experience associated with said service; a channel quality available for uplink transmission; or a channel quality available for downlink transmission. The channel quality may be represented by, for example, a value representing a latency and/or a jitter of that channel.

Further analogous to the above example of Figure 6A, the apparatus of Figure 6B may identify the homomorphic encryption algorithm and/or one or more parameters of the homomorphic encryption algorithm, and select second respective value(s) for one or more parameters of the at least one first algorithm based on the identifying.

The first algorithm may comprise a neural audio decompression algorithm that is configured to output decompressed audio signals based on input decrypted audio signals, wherein the decrypted audio signals are compliant with the homomorphic property of Figure 6B.

The apparatus may not perform vector dequantisation on said at least one decrypted audio signal during said decompressing.

The apparatus may receive at least one scaling factor; and scale the at least one decompressed audio signal and/or the least one decrypted audio signal using the at least one scaling factor. This may be as described in relation to example d) of the above-mentioned audio processing techniques that may be performed at a server.

Figure 7 illustrates a method that may be performed by an apparatus. The apparatus may comprise hardware configured to perform one or more of the features of 701 to 703. The apparatus may comprise software configured to perform one or more of the features of 701 to 703. The apparatus may be comprised in a server. The server may be as described in relation to any of Figures 6A and/or 6B.

During 701, the apparatus receives an encrypted audio signal that was encrypted using a homomorphic encryption algorithm.

During 702, without decompressing the encrypted audio signal, the apparatus performs one or more computations on the encrypted audio signal using a second algorithm to form a computed encrypted audio signal that combines the encrypted audio signal with another audio signal.

During 703, the apparatus provides the computed encrypted audio signal to one or more user equipment.

The another audio signal may comprise an unencrypted audio signal. The another audio signal may comprise another encrypted audio signal (e.g., another audio signal that has been encrypted using a homomorphic encryption algorithm).

The another audio signal may comprise a signal that corresponds to an audio filter.

The apparatus may identify the homomorphic encryption algorithm and/or one or more parameters of the homomorphic encryption algorithm, and select the second algorithm based on the identifying.

The apparatus may receive another encrypted audio signal that was encrypted using a homomorphic encryption algorithm. In this example, the another audio signal may comprise the received another encrypted audio signal.

The performing one or more computations may comprise performing at least one of: addition of the two or more encrypted audio signals; addition and normalisation of the two or more encrypted audio signals; addition with dynamic range compression of the two or more encrypted audio signals; or addition with multiplication of the two or more encrypted audio signals to provide context-based weighting. This may be as described in relation to examples a) to d) of the above-mentioned audio processing techniques that may be performed at a server.

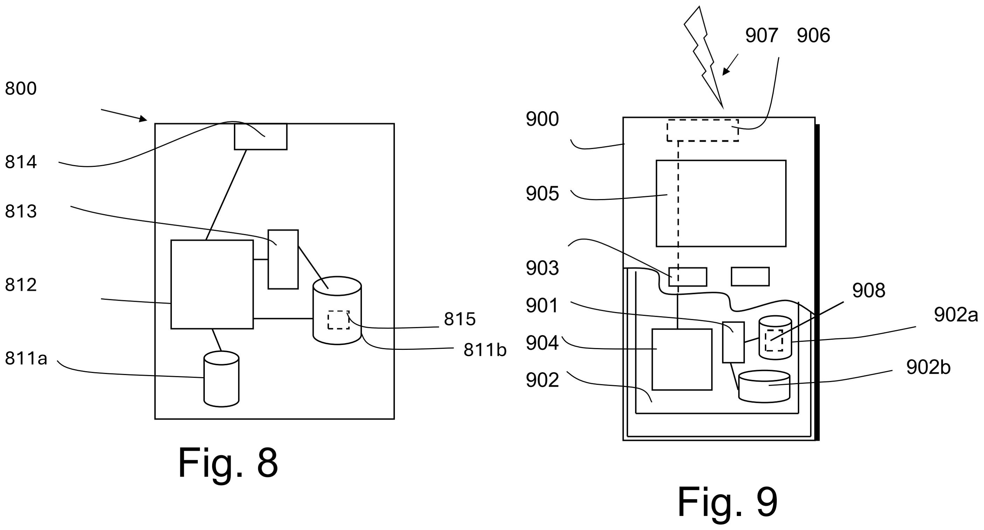

Figure 8 illustrates an example of a control apparatus 800 for causing a network device (such as the above mentioned server) to perform its operations. The control apparatus may comprise at least one random access memory (RAM) 811a, at least on read only memory (ROM) 811b, at least one processor 812, 813 and an input/output interface 814. The at least one processor 812, 813 may be coupled to the RAM 811a and the ROM 811b. The at least one processor 812, 813 may be configured to execute an appropriate software code 815. The software code 815 may for example allow to perform one or more steps to perform one or more of the present aspects. The software code 815 may be stored in the ROM 811b. The control apparatus 800 may be interconnected with another control apparatus 800 controlling another function of the network device. In some embodiments, each function of the network device comprises a control apparatus 800.

Figure 9 illustrates an example of a terminal 900, such as a user equipment mentioned above. The terminal 900 may be provided by any device capable of sending and receiving radio signals, such as the user device described herein. The terminal 900 may provide, for example, communication of data for carrying communications. The communications may be one or more of voice, electronic mail (email), text message, multimedia, data, machine data and so on.

The terminal 900 may receive signals over an air or radio interface 307 via appropriate apparatus for receiving or over a wireline medium (such as, for example, an optical fibre, an ethernet cable, a coaxial cable, and/or a copper telephone cable). The terminal 900 may transmit signals via appropriate apparatus for transmitting radio signals. In Figure 9 transceiver apparatus is designated schematically by block 906. The transceiver apparatus 306 may be provided for example by means of a radio part and associated antenna arrangement. The antenna arrangement may be arranged internally or externally to the mobile device.

The terminal 900 may be provided with at least one processor 901, at least one memory ROM 902a, at least one RAM 902b and other possible components 903 for use in software and hardware aided execution of tasks it is designed to perform, including control of access to and communications with access systems and other communication devices. The at least one processor 901 is coupled to the RAM 902b and the ROM 902a. The at least one processor 901 may be configured to execute an appropriate software code 908. The software code 908 may for example allow to perform one or more of the present aspects. The software code 908 may be stored in the ROM 902a.

The processor, storage and other relevant control apparatus can be provided on an appropriate circuit board and/or in chipsets. This feature is denoted by reference 904. The device may optionally have a user interface such as key pad 905, touch sensitive screen or pad, combinations thereof or the like. Optionally one or more of a display, a speaker and a microphone may be provided depending on the type of the device.

In some exemplary embodiments, the terminal 900 may be an apparatus comprising at least one processor and at least one memory storing instructions that, when executed by the at least one processor, cause a user device to perform examples or embodiments described in this document.

The term "terminal device" refers to any end device that may be capable of wireless communication. By way of example rather than limitation, a terminal device may also be referred to as a communication device, user equipment (UE), a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user device", "user equipment" and "UE" may be used interchangeably.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

**Claims**

1.  An apparatus comprising means for performing:

    obtaining at least one audio signal;
    compressing the at least one audio signal using at least one first algorithm to output at least one compressed audio signal, wherein a summation of two or more compressed audio signals is largely homomorphic to a summation of two or more audio signals; and
    encrypting the at least one compressed audio signal using a homomorphic encryption algorithm to form at least one encrypted audio signal.

2.  An apparatus as claimed in any preceding claim, further comprising means for transmitting the at least one encrypted audio signal to a server.

3.  An apparatus as claimed in any preceding claim, further comprising means for performing:

    identifying one or more characteristics and/or requirements of a service corresponding to the at least one audio signal; and
    selecting first respective value(s) for one or more parameters of the at least one first algorithm based on the identifying.

4.  An apparatus as claimed in claim 3, wherein the one or more characteristics and/or requirements comprise one or more of: a bandwidth available for transmission of the at least one encrypted audio signal; a bandwidth available for receiving at least one other encrypted audio signal; a quality of service associated with said service; a quality of experience associated with said service; a channel quality available for uplink transmission; or a channel quality available for downlink transmission.

5.  An apparatus as claimed in any preceding claim, further comprising means for performing:

    identifying the homomorphic encryption algorithm and/or one or more parameters of the homomorphic encryption algorithm; and
    selecting second respective value(s) for one or more parameters of the at least one first algorithm based on the identifying.

6.  An apparatus as claimed in any of claims 3 to 5, further comprising means for sending said first and/or second respective value(s) to a server.

7.  An apparatus as claimed in any preceding claim, wherein the first algorithm comprises a neural audio compression algorithm that is configured to output compressed audio signals that are compliant with the homomorphic property of claim 1.

8.  An apparatus as claimed in any preceding claim, wherein vector quantisation is not performed by the apparatus on said at least one audio signal during said compressing.

9.  An apparatus as claimed in any preceding claim, further comprising means for performing: normalising the at least one compressed audio signal or the at least one audio signal using a scaling factor; and providing the scaling factor and the at least one encrypted signal to a server.

10. An apparatus comprising means for performing:

obtaining at least one encrypted audio signal;
decrypting the at least one compressed audio signal using a homomorphic encryption algorithm to form at least one decrypted audio signal; and
decompressing the at least one decrypted audio signal using at least one first algorithm to output at least one decompressed audio signal, wherein a summation of two or more decrypted audio signals is largely homomorphic to a summation of two or more decompressed audio signals.

11. An apparatus as claimed in claim 10, further comprising means for performing:

identifying one or more characteristics and/or requirements of a service corresponding to the at least one encrypted audio signal; and
selecting first respective value(s) for one or more parameters of the at least one first algorithm based on the identifying.

12. An apparatus as claimed in claim 11, wherein the one or more characteristics and/or requirements comprise one or more of: a bandwidth available for transmission of the at least one encrypted audio signal; a bandwidth available for receiving at least one other encrypted audio signal; a quality of service associated with said service; a quality of experience associated with said service; a channel quality available for uplink transmission; or a channel quality available for downlink transmission.

13. An apparatus as claimed in any of claims 10 to 12, further comprising means for performing:

identifying the homomorphic encryption algorithm and/or one or more parameters of the homomorphic encryption algorithm; and
selecting second respective value(s) for one or more parameters of the at least one first algorithm based on the identifying.

14. An apparatus as claimed in any of claims 10 to 13, further comprising means for receiving, from a server, third respective value(s) for one or more parameters of the at least one first algorithm.

15. An apparatus comprising means for performing:

receiving an encrypted audio signal that was encrypted using a homomorphic encryption algorithm;
without decompressing the encrypted audio signal, performing one or more computations on the encrypted audio signal using a second algorithm to form a computed encrypted audio signal that combines the encrypted audio signal with another audio signal; and
providing the computed encrypted audio signal to one or more user equipment.

Fig. 1

Fig. 2B

Fig. 2A

Fig. 3

Fig. 2C

Fig. 4

401
402 → 403
405 ← 404
410

401'
402' → 403'
405' ← 404'

Fig. 6A
601A
↓
602A
↓
603A

Fig. 6B
601B
↓
602B
↓
603B

Fig. 7
701
↓
702
↓
703

EP 4 761 170 A1

# Fig. 5

EP 4 761 170 A1

Fig. 8

Fig. 9

EP 4 761 170 A1

Europäisches
Patentamt
European
Patent Office
Office européen
des brevets

**EUROPEAN SEARCH REPORT**

Application Number

EP 25 22 0636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARCHER DAVID W. ET AL: "Computing with Data Privacy: Steps toward Realization", SECURITY & PRIVACY, IEEE IEEE SERVICE CENTER, LOS ALAMITOS, CA., US, vol. 13, no. 1, 1 January 2015 (2015-01-01), pages 22-29, XP011572659, ISSN: 1540-7993, DOI: 10.1109/MSP.2015.3 [retrieved on 2015-02-05] | 1-6,8-15 | INV. H04L9/00 |
| Y | * section FHE-based VoIP; page 27 - page 28 * ----- | 7 | |
| A | US 8 264 958 B1 (PANKAJAKSHAN BEJOY [US]) 11 September 2012 (2012-09-11) * column 10, lines 32-55 * ----- | 3-6,9, 11-14 | |
| A | US 5 886 276 A (LEVINE SCOTT N [US] ET AL) 23 March 1999 (1999-03-23) * column 10, line 52 - column 11, line 1 * ----- | 3-6,9, 11-14 | |
| Y | ALEXANDRE D\'EFOSSEZ ET AL: "High Fidelity Neural Audio Compression", ARXIV.ORG CORNELL UNIVERSITY LIBRARY, 201 OLIN LIBRARY CORNELL UNIVERSITY ITHACA, NY 14853, 24 October 2022 (2022-10-24), XP091352632, * figure 1 * * the whole document * ----- | 7 | TECHNICAL FIELDS SEARCHED (IPC) H04L H04R |

The present search report has been drawn up for all claims

| Place of search | Date of completion of the search | Examiner |
|---|---|---|
| Munich | 28 April 2026 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**EP 4 761 170 A1**

## ANNEX TO THE EUROPEAN SEARCH REPORT
## ON EUROPEAN PATENT APPLICATION NO.

EP 25 22 0636

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2026

| Patent document cited in search report | | Publication date | Patent family member(s) | | Publication date |
|---|---|---|---|---|---|
| US 8264958 | B1 | 11-09-2012 | US | 8264958 B1 | 11-09-2012 |
| | | | US | 8971185 B1 | 03-03-2015 |
| US 5886276 | A | 23-03-1999 | NONE | | |

EPO FORM P0459

For more details about this annex : see Official Journal of the European Patent Office, No. 12/82

28